Europäisches Patentamt

European Patent Office

Office européen des brevets

(11) Veröffentlichungsnummer : **0 167 903 B1**

(12) **EUROPÄISCHE PATENTSCHRIFT**

(45) Veröffentlichungstag der Patentschrift :
04.05.88

(51) Int. Cl.⁴ : **A 01 D 90/04**

(21) Anmeldenummer : 85107689.3

(22) Anmeldetag : 21.06.85

(54) Schneidwerk.

(30) Priorität : 10.07.84 DE 3425287

(43) Veröffentlichungstag der Anmeldung :
15.01.86 Patentblatt 86/03

(45) Bekanntmachung des Hinweises auf die Patenterteilung : 04.05.88 Patentblatt 88/18

(84) Benannte Vertragsstaaten :
AT CH DE GB IT LI NL

(56) Entgegenhaltungen :
EP-A- 0 028 395
DE-A- 2 734 462
DE-A- 3 245 596
DE-U- 8 130 492

(73) Patentinhaber : B. Strautmann & Söhne GmbH & Co.
Bielefelder Strasse 53
D-4518 Bad Laer 1 (DE)

(72) Erfinder : Steffens, Josef
Ravensburger Weg 13
D-4834 Harsewinkel (DE)

(74) Vertreter : Stracke, Alexander, Dipl.-Ing. et al
Jöllenbecker Strasse 164
D-4800 Bielefeld 1 (DE)

## Beschreibung

Die vorliegende Erfindung betrifft ein Schneidwerk für Halmgüter, bestehend aus mehreren, in einem Förderkanal einer Erntevorrichtung lösbar angeordneten, um jeweils eine an der Wandung des Förderkanals festgelegte Schwenkachse schwenkbar gelagerten Messern, die in der Betriebsstellung jeweils durch einen, sich in einer auf der der Schwenkachse gegenüberliegenden Messerrückenseite jedes Messers vorgesehenen Vertiefung abstützenden und mit dem oberen Ende einer Feder verbundenen Bolzen gehalten werden, wobei das untere Ende der Feder, der Schwenkachse benachbart, mit einem weiteren Bolzen verbunden ist, und die beim Zusammenwirken mit Steinen od. dgl. Fremdkörpern entgegen der Wirkung der Feder mindestens teilweise aus dem Förderkanal herausschwenkbar sind.

Ein derartiges Schneidwerk ist beispielsweise aus der DE-U 81 30 492.7 bekannt.

Dabei übt die mit ihrem unteren Ende ortsfest an der Erntevorrichtung festgelegte Zugfeder auf einen mit ihrem oberen Ende verbundenen Bolzen eine Zugkraft aus, wobei der Bolzen bei Betriebsstellung des Messers in einer Vertiefung des Messerrückens einliegt, sich beim Zusammenwirken des Messers mit einem Fremdkörper durch das Schwenken des Messers entgegen der Federkraft bewegt und während dieser Bewegung auf dem Messerrücken abrollt. Nach dem Passieren des Fremdkörpers wird durch den Bolzen im Zusammenwirken mit der Zugfeder das Messer in die ursprüngliche Betriebsstellung zurückgeschwenkt.

Eine zuverlässige Fremdkörpersicherung ist durch diese bekannte Konstruktion zwar gegeben, jedoch ist aufgrund der ortsfesten Festlegung eines Endes der Zugfedern das vollständige Herausnehmen der Messer zum Zwecke der Instandsetzungs- oder Wartungsarbeiten, wie beispielsweise das Nachschleifen der Schneidkanten der Messer, nur unter erschwerten Bedingungen möglich. Da die Zugfeder sich während des Lösens des Messers in keiner Phase in einem entspannten Zusand befindet, muß der mit dem oberen Ende der Feder verbundene Bolzen während des ganzen Vorganges gegen die Federkraft gehalten werden. Das gleiche Problem ergibt sich auch beim Wiedereinführen des Messers nach einem erfolgten Schärfen.

In der Praxis wird nun aufgrund der dargestellten Problematik auf ein vollständiges Herauslösen der Messer aus der Erntevorrichtung verzichtet und die durchzuführenden Wartungsarbeiten werden an Ort und Stelle, soweit die entsprechenden Bereiche der Messer halbwegs zugänglich sind, durchgeführt.

Dies ist unter den gegebenen Verhältnissen natürlich besonders beschwerlich, zeit- und kostenaufwendig.

Der vorliegenden Erfindung liegt daher die Aufgabe zugrunde, ein Schneidwerk der gattungsgemäßen Art zu schaffen, bei dem ein Herausnehmen bzw. Einsetzen jedes Messers auf einfachste Art und Weise, schnell und dadurch kostengünstig möglich ist.

Diese Aufgabe wird erfindungsgemäß dadurch gelöst, daß der mit dem oberen Ende der Feder verbundene Bolzen in einen gestellseitigen Langloch der Erntevorrichtung gleitbar gelagert ist und daß der mit dem unteren Ende der Feder verbundene Bolzen in einer Ausnehmung des Messers formschlüssig und von dem· Messer trennbar einliegt.

Durch diese Konstruktion ist es nun möglich, durch Ausklinken des in der Ausnehmung des Messers formschlüssig angeordneten, mit dem unteren Ende der Feder verbundenen Bolzens das Messer aus einer arretierten Stellung zu lösen, wobei nach einer vorteilhaften Ausgestaltung der Erfindung das untere Ende der Feder mittels des zugeordneten Bolzens im Bereich der der Schwenkachse abgewandten Messerecke des Messers festgelegt ist.

Insbesondere dann, wenn, wie ein weiteren erfindungsgemäßer Gedanke vorsieht, der diesem unteren Ende der Feder zugeordnete Bolzen an einem Verschlußhebel befestigt ist, läßt sich durch Schwenken dieses Verschlußhebels um einen an dem Verschlußhebel festgelegten und sich ebenfalls in der Ausnehmung des Messers abstützenden Schwenkbolzen das entsprechende Federende sehr leicht aus der Ausnehmung des Messers herausführen und somit das Messer aus seiner arretierten Stellung lösen.

Das so gelöste und nun frei bewegliche Messer kann dadurch, daß es mit einem hakenförmigen Ansatz die entsprechende Schwenkachse der Erntevorrichtung hintergreift, mühelos ausgehängt werden, während beim Einsetzen des Messers in die Erntevorrichtung dieses mit seinem hakenförmigen Ansatz zunächst auf die Schwenkachse gehängt und anschließend mittels des Verschlußhebels arretiert wird.

Diese Art des Einhängens bedeutet nicht nur eine Erleichterung der Montage des Messers, sondern bietet auch die Gewähr dafür, daß das Messer beim Demontieren nicht selbsttätig herunterfallen kann.

Durch die Festlegung des oberen Endes der Feder an dem Bolzen, der in einem gestellseitigen Langloch der Erntevorrichtung gleitbar gelagert ist, wird gleichzeitig auch die Funktion einer Fremdkörpersicherung übernommen. Dabei stützt sich dieser Bolzen in der bekannten, mit einer Ansprechschwelle versehenen Vertiefung ab.

In idealer Weise wird durch die erfindungsgemäße Konstruktion eines Schneidwerkes die Fremdkörpersicherung mit einer Entriegelungsmechanik kombiniert, wobei ein besonderer Vorteil darin zu sehen ist, daß das Herausnehmen bzw. Einsetzen der einzelnen Messer ohne Zuhilfenahme von Werkzeugen möglich ist.

Weitere vorteilhafte Ausgestaltungen der Erfindung sind in den Unteransprüchen gekennzeichnet.

Ein Ausführungsbeispiel der Erfindung wird anhand beigefügter Zeichnungen nachfolgend beschrieben.

Es zeigen :

Figur 1 einen Teilquerschnitt durch eine Erntevorrichtung mit einem erfindungsgemäß ausgebildeten Schneidwerk,

Figur 2 den Teilquerschnitt nach Figur 1 mit unterschiedlichen Stellungen der Messer des Schneidwerkes,

Figur 3 eine Rückansicht auf einer Förderkanal der Erntevorrichtung gesehen in Richtung des Pfeiles III-III in Figur 1,

Figur 4 ein erfindungsgemäß ausgebildetes Messer.

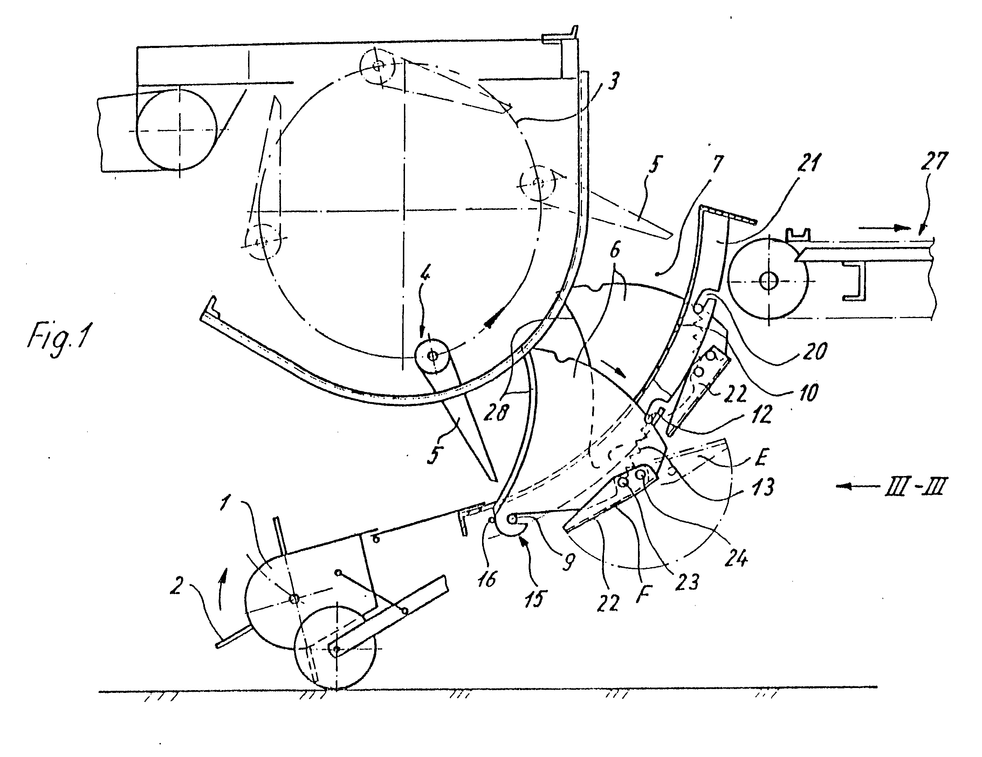

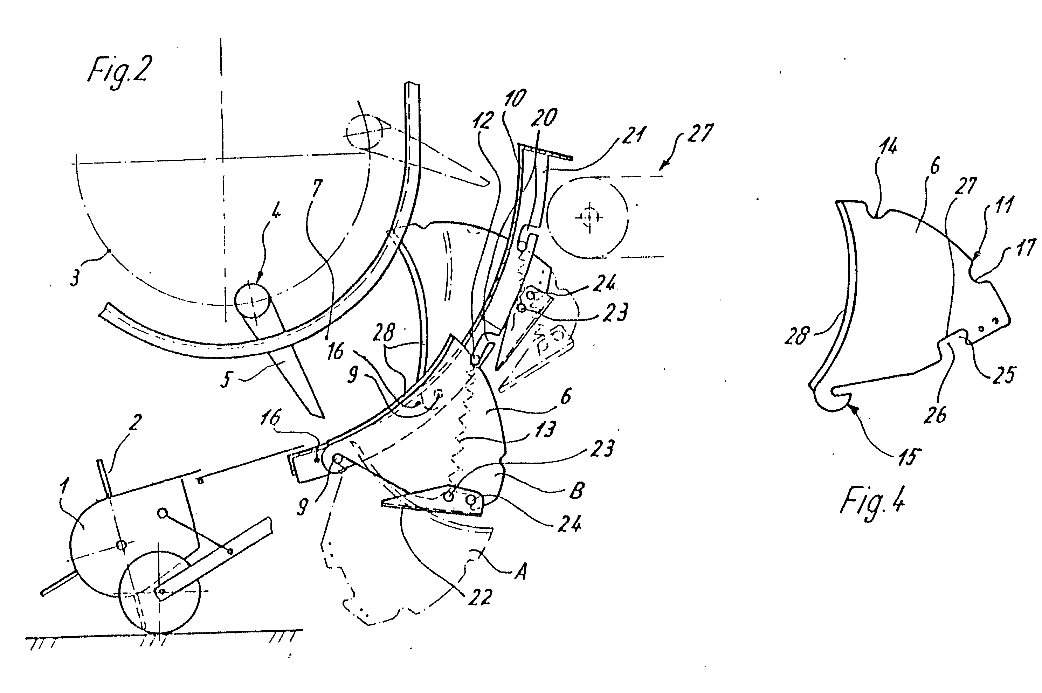

Die Figuren 1 und 2 zeigen teilweise schematisch dargestellt eine Erntevorrichtung, die in ihrem Grundaufbau aus einer Aufnahmevorrichtung 1, einem sich daran anschließenden Förderkanal 7, mehreren in dem Förderkanal angeordneten Messern 6 sowie einer Rotationstrommel 3 besteht, deren über Förderschwingen 4 mit ihr verbundene Förderzinken 5 in den Förderkanal 7 hineinragen.

Ein am Boden liegendes bereits gemähtes Halmgut wird durch Federzinken 2 der Aufnahmevorrichtung 1 aufgenommen und an den Anfang des Förderkanals 7 gefördert. Anschließend wird das Halmgut von den Förderzinken 5 der Rotationstrommel 3 ergriffen und durch den Förderkanal 7 und gegen die darin quer zur Halmgutrichtung angeordneten Messer 6 gedrückt, wobei das Halmgut entsprechend den Abständen der Messer 6 zueinander geschnitten wird. Da sich die Förderzinken 5 im Abstandsbereich der Messer 6 bewegen, wird das geschnittene Halmgut zum Ende des Förderkanals hin befördert und gelangt über ein Förderband 27, das an der Rückwand des Förderkanals 7 angeordnet ist, in den Laderaum eines nicht dargestellten Ladewagens.

Trifft nun beim Einbringen des Halmgutes in den Förderkanal 7 ein Fremdkörper, beispielsweise ein Stein oder dergleichen, auf die Schneidkante des Messers 6, so schwenkt dieses gegen eine Federkraft aus dem Förderbereich heraus, so daß der Fremdkörper den Förderkanal 7 frei passieren kann und die Schneidkante des Messers 6 nicht beschädigt wird.

Um diese Vorgänge zu ermöglichen, ist eine an sich bekannte Fremdkörpersicherung vorgesehen, die aus einem Bolzen 12 besteht, der sich in einer Vertiefung 17 des Messers 6 abstützt und der mit einem Ende einer Feder 13 verbunden ist. Die Vertiefung 17 ist mit einer Ansprechschwelle 11 versehen, die so ausgebildet ist, daß sie für das Ausschwenken des Messers 6 aus dem Förderkanal 7 einen gewissen Widersrand darstellt, der erst durch das Auftreten einer durch den Fremdkörper gebildeten Gegenkraft überwunden wird.

Der sich in der Vertiefung 17 des Messers 6 abstützende Bolzen 12 wird in einem Langloch 20 gehalten, das als einseitig offener Schlitz ausgebildet ist und das in einer parallel zu dem entsprechenden Messer an der Rückwand des Förderkanals 7 festgelegten Führungsleiste 21 angeordnet ist.

Durch das Langloch 20 kann der Bolzen 12 beim Ausschwenken des Messers 6 in seiner Lage entsprechend der Differenz zwischen der Vertiefung und der Messeroberkante frei gleiten.

Das untere Ende der Feder 13 ist mit einem Bolzen 23 verbunden, der sich in einer Ausnehmung 26 des Messers 6 abstützt, wobei die Ausnehmung 26, wie auch in der Figur 4 gezeigt ist, im Bereich der einer Schwenkachse 9 abgewandten Messerecke angeordnet ist. Ebenfalls in der Ausnehmung 26 stützt sich ein Schwenkbolzen 24 ab, der ebenso wie der Bolzen 23 an einem Verschlußhebel 22 festgelegt ist.

Bei einem Umlegen des Verschlußhebels 22, bei dem der Schwenkbolzen 24 praktisch ein Schwenklager bildet, wird zunächst die Feder 13 gespannt, während sie nach erfolgtem Umlegen des Verschlußhebels 22 eine entspannte Lage einnimmt, der Verschlußhebel 22 aus der Ausnehmung 26 gelöst werden kann, das Messer 6 sich in einer nicht arretierten Stellung befindet und somit frei entnehmbar ist.

Um zu verhindern, daß das Messer 6 nach dem Lösen des Verschlußhebels herunterfällt, um andererseits aber auch eine leichte Entnahme zu ermöglichen, ist der Verbindungsbereich des Messers 6 mit der Schwenkachse 9 als hakenförmiger Ansatz 15 ausgebildet.

Beim Einsetzen des Messers 6 wird dieses zunächst mit dem Ansatz 15 auf die Schwenkachse 9 aufgehängt, der Schwenkbolzen 24 des Verschlußhebels 22 in die Ausnehmung 26 eingelegt und der Verschlußhebel 22 umgeschwenkt, so daß das Messer 6 durch die mit der Feder 13 verbundenen Bolzen 12, 23 eine arretierte Lage einnimmt.

Ein an der Führungsleiste 21, der Gelenkachse 9 benachbart und außerhalb des Überdeckungsbereiches des Messers 6 angeordneter Anschlagbolzen 16 begrenzt die Stellung des Messers 6 innerhalb des Förderkanals 7 in Richtung der Rotationstrommel 3.

Durch die erfindungsgemäße Ausbildung des Schneidwerkes ist es nun in vorteilhafter Weise möglich, ohne Zuhilfenahme von Werkzeugen jedes Messer 6 nur durch manuelles Lösen des Verschlußhebels 22 aus einer arretierten Stellung zu entnehmen bzw. in eine arretierte Stellung zu bringen.

Auf der dem Oberen Ende der Feder 13 zugeordneten Messerseite ist eine Rastkerbe 14 vorgesehen, in der das Messer 6 durch Einlegen des Bolzens 12 in eine Nichtschneidstellung gebracht und gehalten werden kann. So kann eine nur durch die in Schneidstellung stehenden Messer 6 bestimmte Schnittlänge frei gewählt werden.

Wie in der Figur 4 gezeigt, ist das Messer etwa dreieckförmig ausgebildet, wobei die Schneidkante 28 eine konkave Form und der der Schneidkante 28 benachbarte Messerrücken, in dessen Bereich die Vertiefung 17 und die Rastkerbe 14 vorgesehen ist, eine konvexe Form aufweist.

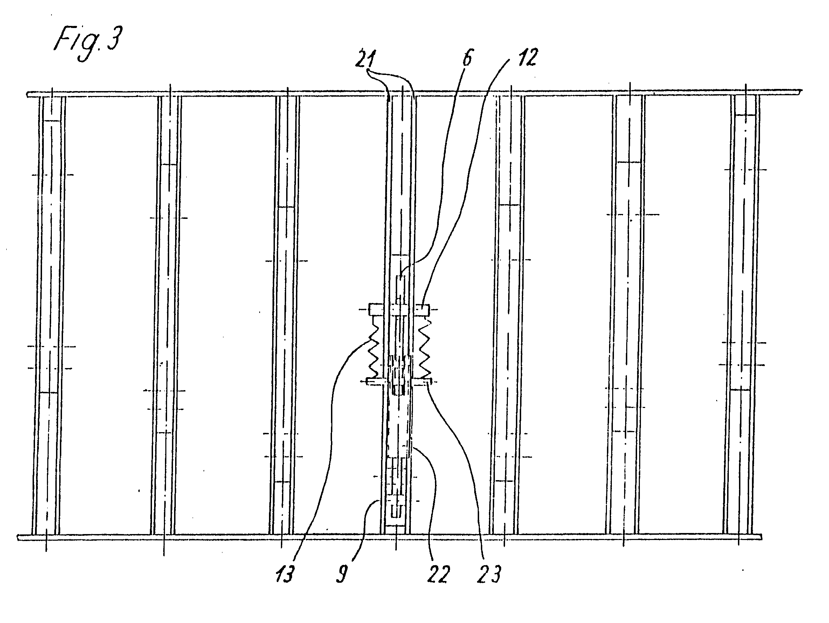

Durch diese konvexe Form des Messerrückens wird verhindert, daß sich in das geschnittene Halmgut zwischen der Rückwand 10 des Förderkanals 7 und dem Messerrücken des Messers 6 aufbaut, was zwangsläufig zu Betriebsstörungen, insbesondere zur Behinderung der Fremdkörpersicherung führen würde. In der Figur 3 ist die Stellung der einzelnen Messer 6 zueinander dargestellt. Dabei ist zu erkennen, daß die Messer 6, von denen in der Figur 3 nur eines konkret dargestellt ist, in bekannter Weise versetzt zueinander angeordnet sind. Durch diese Anordnung der Messer 6 wird verhindert, daß diese gleichzeitig beim Schneiden des Halmgutes zum Einsatz kommen, was zu einer unerwünschten Stoßbeanspruchung der Messer 6 führen würde.

**Patentansprüche**

1. Schneidwerk für Halmgüter, bestehend aus mehreren, in einem Förderkanal (7) einer Erntevorrichtung lösbar angeordneten, um jeweils eine an der Wandung des Förderkanals (7) festgelegte Schwenkachse (9) schwenkbar gelagerten Messern (6), die in der Betriebsstellung jeweils durch einen, sich in einer auf der der Schwenkachse (9) gegenüberliegenden Messerrückenseite jedes Messers (6) vorgesehenen Vertiefung (17) abstützenden und mit dem oberen Ende einer Feder (13) verbundenen Bolzen (12) gehalten werden, wobei das untere Ende der Feder (13), der Schwenkachse (9) benachbart, mit einem weiteren Bolzen (23) verbunden ist, und die beim Zusammenwirken mit Steinen od. dgl. Fremdkörper entgegen der Wirkung der Feder (13) mindestens teilweise aus dem Förderkanal (7) herausschwenkbar sind, dadurch gekennzeichnet, daß der mit dem oberen Ende der Feder (13) verbundene Bolzen (12) ein einem gestellseitigen Langloch (20) der Erntevorrichtuntg gleitbar gelagert ist und daß der mit dem unteren Ende der Feder (13) verbundene Bolzen (23) in einer Ausnehmung (26) des Messers (6) formschlüssig und von dem Messer (6) trennbar einliegt.

2. Schneidwerk nach Anspruch 1, dadurch gekennzeichnet, daß das untere Ende der Feder (13) mittels des zugeordneten Bolzens (23) im Bereich der der Schwenkachse (9) abgewandten Messerecke des Messers (6) festgelegt ist.

3. Schneidwerk nach Anspruch 1 oder 2, dadurch gekennzeichnet, daß der mit dem unteren Ende der Feder (13) verbundene Bolzen (23) an einem Verschlußnebel (22) befestigt ist, der um einen ebenfalls am Verschlußnebel (22) befestigten und sich in der Ausnehmung (26) abstützenden Schwenkbolzen (24) schwenkbar ist.

4. Schneidwerk nach Anspruch 1, dadurch gekennzeichnet, daß das Messer (6) im Verbindungsbereich mit der Schwenkachse (9) einen hakenförmigen Ansatz (15) aufweist.

5. Schneidwerk nach Anspruch 1, dadurch gekennzeichnet, daß auf der dem oberen Ende der Feder (13) zugeordneten Messerseite eine Rastkerbe (14) vorgesehen ist.

6. Schneidwerk nach Anspruch 1, dadurch gekennzeichnet, daß das Langloch (20) als einseitig offener Schlitz ausgebildet ist, der in einer parallel zur Messerebene an der Rückwand (10) des Förderkanals (7) festgelegten Führungsleiste (21) angeordnet.

7. Schneidwerk nach Anspruch 1 oder 6, dadurch gekennzeichnet, daß an jeder Führungsleiste (21), der Gelenkachse (9) benachbart, außerhalb des Überdeckungsbereiches jedes Messers (6) ein Anschlagbolzen (16) vorgesehen ist.

8. Schneidwerk nach einem oder mehreren der vorhergehenden Ansprüche, dadurch gekennzeichnet, daß jedes Messer (6) dreieckförmig ausgebildet ist, wobei die Schneidkante (28) konkav und der der Schneidkante (28) benachbarte Messerrücken konvex ausgebildet ist.

**Claims**

1. A cutter mechanism for stalk crop materials comprising a plurality of blades (6) which are arranged releasably in a conveyor passage (7) of a harvester and which are mounted pivotably about a respective pivot axis (9) fixed to the wall of the conveyor passage (7) and which are held in the operative position by a respective pin (12), the pin being connected to the upper end of a spring (13) and being supported in a depression (17) provided on the rear side of each blade (6) which is in opposite relationship to the pivot axis (9), wherein the lower end of the spring (13), adjacent to the pivot axis (9), is connected to a further pin (23), the blades (6) being pivotable at least partially out of the conveyor passage (7) against the force of the spring (13) upon co-operating with stones or the like foreign bodies, characterised in that the pin (12) which is connected to the upper end of the spring (13) is mounted slidably in a slot (20) in the support structure of the harvester and that the pin (23) which is connected to the lower end of the spring (13) lies positively in a recess (26) in the blade (6) and separably from the blade (6).

2. A cutter mechanism according to claim 1 characterised in that the lower end of the spring (13) is fixed by means of the associated pin (23) in the region of the corner of the blade (6) which is remote from the pivot axis (9).

3. A cutter mechanism according to claim 1 or claim 2 characterised in that the pin (23) which is connected to the lower end of the spring (13) is fixed to a locking lever (22) which is pivotable about a pivot pin (24) which is also fixed to the locking lever (22) and is supported in the recess (26).

4. A cutter mechanism according to claim 1 characterised in that the blade (6) has a hooked projection (15) in the region of its connection to the pivot axis (9).

5. A cutter mechanism according to claim 1 characterised in that a retaining notch (14) is provided on the side of the blade which is associated with the upper end of the spring (13).

6. A cutter mechanism according to claim 1 characterised in that the slot (20) is in the form of a slot which is open at one end and which is arranged in a guide bar (20) which is fixed parallel to the plane of the blade to the rear wall (10) of the conveyor passage (7).

7. A cutter mechanism according to claim 1 or claim 6 characterised in that a stop pin (16) is provided on each guide bar (21), adjacent the pivot axis (9), outside the region of overlap of each blade (6).

8. A cutter mechanism according to one or more of the preceding claims characterised in that each blade (6) is triangular, wherein the cutting edge (28) is concave and the back of the blade which is adjacent to the cutting edge (28) is convex.

## Revendications

1. Mécanisme de coupe pour céréales composé de plusieurs lames (6) disposées de manière à pouvoir être démontées dans un canal de transport (7) d'un dispositif à récolter et logées de manière à pouvoir pivoter autour d'un pivot (9) fixé respectivement à la paroi du canal de transport (7), qui sont maintenues en position de marche par un axe (12) s'appuyant sur un évidement (17) prévu dans la partie du dos de chaque lame (6) opposée au pivot et relié à la partie supérieure d'un ressort (13), l'extrémité inférieure du ressort (13), voisine du pivot (9), étant reliée à un autre axe (23), et qui sous leur action conjuguée et celle de pierres ou de corps étrangers similaires peuvent être sorties contre l'action du ressort (13) par pivotement au moins en partie du canal de transport (7), caractérisé en ce sens que l'axe (12) relié à l'extrémité supérieure du ressort (13) est logé dans un trou oblong (20) aménagé dans le châssis du dispositif à récolter de manière à pouvoir coulisser et que l'axe (23) relié à l'extrémité inférieure du ressort (13) repose solidairement dans une encoche (26) aménagée dans la lame (6) de manière à pouvoir en être détaché.

2. Mécanisme de coupe selon la revendication 1, caractérisé en ce que l'extrémité inférieure du ressort (13) est fixée dans la zone du bec de la lame (6) opposée au pivot (9) au moyen de l'axe correspondant.

3. Mécanisme de coupe selon la revendication 1 ou 2, caractérisé en ce que l'axe (23) relié à l'extrémité inférieure du ressort (13) est fixé à un levier de fermeture (22) capable de pivoter autour d'un axe de pivotement (24) fixé également au levier de fermeture (22) et s'appuyant sur l'encoche (26).

4. Mécanisme de coupe selon la revendication 1, caractérisé en ce que la lame (6) présente une partie en saillie (15) dans la zone de liaison avec le pivot (9).

5. Mécanisme de coupe selon la revendication 1, caractérisé en ce qu'une encoche (14) est prévue à l'extrémité supérieure de la partie de la lame correspondant au ressort (13).

6. Mécanisme de coupe selon la revendication 1, caractérisé en ce que le trou oblong (20) se présente sous forme d'une fente ouverte d'un seul côté, disposée dans une barre de guidage (21) fixée au dos (10) du canal de transport (7) parallèlement à l'axe de la lame.

7. Mécanisme de coupe selon la revendication 1 ou 6, caractérisé en ce qu'un boulon d'arrêt (16) est prévu sur chaque barre de guidage (21), voisine du pivot (9), à l'extérieur de la zone de recouvrement de chaque lame (6).

8. Mécanisme de coupe selon l'une ou plusieurs des revendications précédentes, caractérisé en ce que chaque lame (6) est de forme triangulaire, le tranchant (28) étant de forme concave et le dos de la lame voisin du tranchant (28) étant de forme convexe.

Fig.1

0 167 903

*Fig.2*

2

0 167 903

*Fig.4*

Fig. 3